(19) **Europäisches Patentamt**

**European Patent Office**

**Office européen des brevets**

(11) **EP 1 210 534 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(21) Anmeldenummer: **00964093.9**

(22) Anmeldetag: **02.09.2000**

(51) Int Cl.⁷: **F16H 61/06**, F16H 61/14

(86) Internationale Anmeldenummer:
**PCT/EP00/08576**

(87) Internationale Veröffentlichungsnummer:
**WO 01/020200 (22.03.2001 Gazette 2001/12)**

(54) **VERFAHREN ZUR REGELUNG EINER KUPPLUNG ODER EINER BREMSE IN EINEM GETRIEBE**

METHOD FOR REGULATING A CLUTCH OR A BRAKE IN A TRANSMISSION

PROCEDE POUR LA REGULATION D'UN EMBRAYAGE OU D'UN FREIN DANS UNE TRANSMISSION

(84) Benannte Vertragsstaaten:
**DE**

(30) Priorität: **10.09.1999 DE 19943334**

(43) Veröffentlichungstag der Anmeldung:
**05.06.2002 Patentblatt 2002/23**

(73) Patentinhaber: **ZF FRIEDRICHSHAFEN Aktiengesellschaft**
**88038 Friedrichshafen (DE)**

(72) Erfinder:
• **ROSSMANN, Thomas**
  **88131 Lindau-Bodolz (DE)**
• **NEUMANN, Dieter**
  **88131 Lindau (DE)**
• **TENBROCK, Friedrich**
  **88085 Langenargen (DE)**

(56) Entgegenhaltungen:
DE-A- 19 520 579        US-A- 5 527 238
US-A- 5 719 768        US-A- 5 752 210

• GRUHLE, JAUCH, KNAPP UND RÜCHARDT: "Modellgestützte Applikation eine "Gerelgelten Wandlerüberbrückungskupplung" in Pkw-Automatgetrieben" 1995 , VDI-BERICHTE , DÜSSELDORF NR XP002153432 1175 in der Anmeldung erwähnt Seite 265 -Seite 280

EP 1 210 534 B1

## Beschreibung

Die Erfindung betrifft ein Verfahren zur Regelung einer Kupplung oder einer Bremse eines elektro-hydraulisch gesteuerten Getriebes gemäß dem Oberbegriff des Anspruchs 1.

Ein Automatgetriebe für ein Kraftfahrzeug weist üblicherweise mehrere Kupplungen und Bremsen auf, mit denen verschiedene Gangstufen und die Fahrtrichtung geschaltet werden. Als Anfahrelement wird in solchen Automatgetrieben üblicherweise ein hydrodynamischer Drehmomentenwandler verwendet, der zur Optimierung des Gesamtwirkungsgrades des Getriebes mit einer Wandlerüberbrückungskupplung versehen ist, die in bestimmten Gangstufen in Abhängigkeit von Drehzahl und Last des antreibenden Motors teilweise oder ganz geschlossen wird.

Weiterhin sind spezielle naßlaufende Anfahrkupplungen bekannt geworden, die auch im Automatgetriebe integriert sein können. Meistens sind solche Anfahrkupplungen jedoch als Baugruppe am Getriebeeingang angeordnet, beispielsweise auch als Anfahrelement in einem automatisierten Stufengetriebe. Speziell in stufenlosen CVT-Getrieben (Continuous Variable Transmission) wird die nasse Anfahrkupplung auch als Baugruppe am Getriebeabtrieb angeordnet.

Üblicherweise werden die Kupplungen und Bremsen im Automatgetriebe oder im automatisierten Stufengetriebe elektro-hydraulisch betätigt, unabhängig vom Einsatz des Schaltelementes als Gangwechselkupplung, Anfahrkupplung oder Wandlerüberbrückungskupplung. Hierzu werden üblicherweise fahrzeugspezifische, getriebespezifische und fahrzustandsabhängige Größen, wie beispielsweise Achs- und Gangübersetzungen, Getriebeöltemperatur, Motordrehmoment, Motordrehzahl, Fahrzeuggeschwindigkeit, getriebeinterne Drehzahlen, Fahrpedalstellung und Fahrpedaländerung, Bremssignal, Fahrzeugbeschleunigung, Fahrwiderstand und Fahreraktivität, in einem elektronischen Getriebesteuergerät verarbeitet und entsprechende kupplungsrelevante Ausgangssignale, beispielsweise zur Drucksteuerung bzw. Druckregelung oder während eines Gangwechsels oder zur Drehzahlregelung während eines Schlupfbetriebs, an ein hydraulisches Steuergerät übermittelt und dort mittels Aktuatoren und Hydraulikventilen in hydraulische Steuerdrücke für die entsprechende Kupplung umgesetzt.

Die Merkmale des Oberbegriffes des Anspruches 1 sind aus US 5 527 238 A bekannt.

Als ausgeführtes Beispiel beschreiben Gruhle, Jauch, Knapp und Rüchardt in VDI-Berichte Nr. 1175, 1995 ein Verfahren zur modellgestützten Applikation einer geregelten Wandlerüberbrückungskupplung in Pkw-Automatgetrieben. Die Wandlerüberbrückungskupplung und deren Ansteuerung sind heute ein Teilsystem im Automatgetriebe, welches die Fahrbarkeit eines Fahrzeuges entscheidend prägt. Zur Erfüllung der steigenden Anforderungen an Komfort, Fahrleistung und Kraftstoffverbrauch wird hier ein komplexes Ansteuerungskonzept der Wandlerkupplung mit einem Regelkreis vorgeschlagen, der mit der Differenzdrehzahl aus Motor- und Turbinendrehzahl arbeitet. Zur Stabilisierung und Erhöhung der Dynamik des Regelkreises werden zusätzlich eine Lastaufschaltung des Motormoments sowie Sonderfunktionen mit direkten Druckvorgaben für die Wandlerüberbrückungskupplung implementiert.

In seiner Grundstruktur ist das beispielhaft beschriebene Ansteuerungkonzept für alle elektro-hydraulisch betätigten Kupplungen und Bremsen im Pkw-Getriebe anwendbar und nicht auf den Anwendungsfall der Wandlerüberbrückungskupplung beschränkt. Nachteilig bei einem derart komplexen Ansteuerungskonzept ist jedoch die durch zusätzliche Funktionalitäten unübersichtliche und nur mit großem Aufwand erweiterbare Grundstruktur der Software der elektronischen Getriebesteuerung, sowie der erhebliche Aufwand zur Applikation solcher Funktionen.

Der vorliegenden Erfindung liegt daher die Aufgabe zugrunde, ausgehend von dem erwähnten Stand der Technik, ein Verfahren zur Regelung einer Kupplung oder Bremse, die beispielsweise als Schaltkupplung, Anfahrkupplung oder Wandlerüberbrückungskupplung ausgebildet sein kann, hinsichtlich verbesserter Regelqualität und Regeldynamik und hinsichtlich reduziertem Applikationsaufwand weiterzuentwickeln.

Diese Aufgabe ist gemäß der Erfindung durch die Merkmale des Anspruchs 1 gelöst. Weitere Ausgestaltungen der Erfindung gehen aus den Unteransprüchen hervor.

Erfindungsgemäß wird demnach vorgeschlagen, die Kupplungsregelung mit einem modellbasierten Kompensationsdruckregler auszuführen unter Verwendung eines Störgrößenbeobachters, der auf Basis eines Antriebsstrangmodells Störgrößen der Kupplungsregelung nach einem Zustandsschätzverfahren schätzt. Die Störgrößen bilden die Ungenauigkeiten des regelungstechnisch angewendeten physikalischmathematischen Modells zum realen System ab und resultieren insbesondere aus prinzipbedingten Kennlinienfehlern, stationären und dynamischen Steuerfehlern, hydraulischen Toleranzen sowie prinzipbedingten dynamischen Modellfehlern.

Aus dem Antriebsstrangmodell wird also das Störmoment an der zu schaltenden oder zu regelnden Kupplung oder Bremse und das in Kraftflußrichtung hinter der Kupplung oder Bremse anstehende Lastmoment durch den Beobachter geschätzt. Je nach Ausgestaltung des Antriebsstrangmodells kann auch zusätzlich die Eigenform der Drehschwingung des Antriebsstrangs geschätzt werden.

Das erfindungsgemäße Verfahren basiert auf einem nichtlinearen Kompensationsverfahren nach dem Prinzip der exakten Linearisierung. Aus der Verknüpfung eines Hydraulik-Modells der Kupplungsansteuerung mit einem inversen Streckenmodell ergibt sich eine einfache Übertragungsfunktion. Insbesondere durch eine Separierung des nichtlinearen Anteils des Beobachters kann der regelungstechnische Entwurf des Restsystems nach der linearen Theorie erfolgen.

Durch das solchermaßen als beobachtergestützter Kompensationsdruckregelkreis aufgebaute Regelungskonzept der Kupplung werden in besonders vorteilhafter Weise ein betriebspunktunabhängiges, gleichbleibendes Regelverhalten des geschlossenen Regelkreises erzielt, mit einer daraus resultierenden hohen Stelldynamik und einem robusten Folge- und Störverhalten.

In einer ersten Ausgestaltung der Erfindung wird vorgeschlagen, den Störgrößenbeobachter als reduzierten Beobachter auszubilden, der nur die für die Kupplungsregelung relevanten unbekannten Systemgrößen schätzt. In vorteilhafter Weise wird hierdurch eine höchstmögliche Rechengeschwindigkeit und damit eine höchstmögliche Reglerdynamik erzielt.

In einer zweiten Ausgestaltung der Erfindung wird vorgeschlagen, den Störgrößenbeobachter als vollständigen Beobachter auszubilden, der alle Systemgrößen schätzt. In vorteilhafter Weise kann hierdurch insbesondere die Vorsteuerqualtität für den Regler und damit die Regelqualität verbessert werden.

In einer dritten Ausgestaltung der Erfindung wird vorgeschlagen, den Störgrößenbeobachter als Kalman-Filter auszubilden, welcher vorteilhafterweise eine Robustheit gegen Signalrauschen aufweist.

In einer anderen Ausgestaltung der Erfindung wird vorgeschlagen, den Regler des geschlossenen, modellbasierten und beobachtergestützten Kompensationsdruckregelkreises als mehrere verknüpfte Reglerblöcke auszubilden. Ein erster Block als Drehzahlregler verarbeitet die Drehzahlen und Schlupfvorgaben der Kupplungsregelung. In vorteilhafter Weise braucht der Drehzahlregler keine Komponente zur Gewährleistung stationärer Genauigkeiten enthalten und kann als einfacher P-Regler ausgebildet sein.

Ein nachfolgender zweiter Block berechnet aus den Sollvorgaben des Drehzahlreglers, aus den Vorsteuerwerten des inversen Streckenmodells und aus geschätzten Störgrößen des Beobachters eine Druckvorgabe für das hydraulische Stellglied der Kupplungsansteuerung. Vorteilhaft ist hier die betriebspunktunabhängige Umrechnung der Stellröße.

Ein nachfolgender dritter Block als Druckregler gleicht die Toleranzen des hydraulischen Stellgliedes mit Hilfe von geschätzten Größen des Beobachters aus und liefert einen Solldruck für die Kupplungsansteuerung. In vorteilhafter Weise wird durch den Ausgleich der technischen Druckschwankungen üblicher Drucksteller im gesamten Betriebsbereich die Dynamik des Regelkreises deutlich verbessert.

Ein nachfolgender vierter Block arbeitet als herkömmlicher Druck-Strom-Regler und setzt die Solldruckvorgabe in eine Stromvorgabe für den elektrohydraulischen Drucksteller um.

In einer weiteren Ausgestaltung der Erfindung wird vorgeschlagen, den Drehzahlregler des geschlossenen, modellbasierten und beobachtergestützten Kompensationsdruckregelkreises als PD-Regler mit zusätzlichem nichtlinearen Term auszubilden. In vorteilhafter Weise wird hierdurch bei größeren Abweichungen von einem Sollwert eine schnellere Annäherung an den Sollwert erreicht.

In einer weiteren Ausgestaltung der Erfindung wird vorgeschlagen, den Druckregler des geschlossenen, modellbasierten und beobachtergestützten Kompensationsdruckregelkreises als Regler mit PT2-Charakeristik nach dem Prinzip der exakten Linearisierung auszubilden. In vorteilhafter Weise kann hierdurch die Dynamik des Regelkreises beeinflußt werden.

Das erfindungsgemäße Regelungskonzept ist dabei universell für jede elektro-hydraulisch angesteuerte Kupplung einsetzbar. Anwendungsfälle sind beispielsweise eine nasse Anfahrkupplung in einem Automatgetriebe oder in einem automatisierten Handschaltgetriebe ohne oder mit Standabkoppelung (stand by control, SBC), eine Schaltkupplung oder Schaltbremse in einem Automatgetriebe oder eine Wandlerüberbrückungskupplung in einem Automatgetriebe.

Die Erfindung wird im folgenden anhand der Zeichnungen am Beispiel einer Wandlerüberbrückungskupplung näher erläutert.

Es zeigen:

Fig. 1     eine schematische Darstellung einer vereinfachten hydraulischen Ansteuerung einer Wandlerüberbrückungskupplung,

Fig. 2     eine beispielhafte meßtechnische Identifikation der Modell-Gleichung für das nichtlineare Übertragungsverhalten p_WK = f(i_EDS),

Fig. 3     eine schematische Darstellung von drei Antriebsstrang-Modellen als Fig. 3-1, Fig. 3-2 und Fig. 3-3,

Fig. 4     einen beispielhaften erfingungsgemäßen Kompensationddruckregelkreis mit einem Störgrößenbeobachter und

Fig. 5     ein Differentialgleichungssystem für einen beispielhaft ausgeführten Störgrößenbeobachter.

Wie prinzipiell bei jeder Kupplung, bestimmt die Druckdifferenz am Kolben der Wandlerüberbrückungskupplung (WK) das durch die Kupplung übertragbare Drehmoment. Unter der Annahme, daß die durch die Rotation entstehenden Druckanteile auf beiden Seiten des Kolbens gleich groß seien, bestimmt allein der Zuführdruck des WK-Kolbens das mit der WK übertragbare Moment:

$$M\_WK = A\_Kolben * r\_Kolben * z * \mu * p\_WK$$

mit

| | |
|---|---|
| A_Kolben | Fläche des WK-Kolbens |
| R_Kolben | mittlerer Reibbelagradius |
| z | Anzahl der Reibflächen |
| μ | Reibwert = f |
| | (Temperatur, Differenzdrehzahl, Belagpressung) |
| p_WK | Zuführdruck zum WK-Kolben. |

Die geometrischen Größen und der Reibwert lassen sich zu einer Größe $\mu\_geo$ zusammenfassen, womit sich für das mit der WK übertragbare Moment ergibt:

$$M\_WK = \mu\_geo * p\_WK$$

Abweichend vom idealen Verhalten der Kupplung machen sich nunmehr folgende, bekannte Effekte bemerkbar:

- Bei Differenzdrehzahlen ungleich Null wird parallel zur WK über den hydraulischen Kreislauf des Wandlers Drehmoment übertragen. Die Strömung im Kreislauf beeinflußt auch den Raum zwischen dem Turbinenrad und dem WK-Kolben.

- Zur Kühlung der Reibflächen sind die Reibbeläge genutet. Das durch die Nuten fließende Öl führt einen großen Teil der enstehenden Wärme direkt vom Entstehungsort ab. Die radiale Strömung zwischen Kolben und Dekkel bildet einen mehr oder weniger stark ausgeprägten Wirbel aus, der den Druck zwischen Gehäuse und WK-Kolben verändert.

- Je nach Länge und Querschnitt der Rücklaufleitung und der Durchflußmenge entsteht ein Staudruck. Bei Berücksichtigung dieser Effekte lautet die Momentengleichung

$$M\_WK = \mu\_geo * ( p\_WK - p\_0 )$$

mit

p_0   Druckoffset = f (Motordrehzahl, Durchfluß).

$\mu$ bzw. $\mu\_geo$ und $p\_0$ lassen sich nicht mit ausreichender Genauigkeit berechnen. Die Werte werden durch Messungen bestimmt und in Kennfeldern in das Modell integriert.
Die Momentaufnahme und -abgabe des Drehmomentwandlers werden mit zwei Kennlinien im Modell berücksichtigt, die das stationäre Verhalten beschreiben, als Funktion des Drehzahlverhältnisses Turbinendrehzahl zu Motordrehzahl:

| | |
|---|---|
| $M\_p2000 = f (\nu)$ | Pumpenaufnahmemoment bei Motordrehzahl $n\_mot$ = 2 000 1/min |
| $\mu\_WV = f (\nu)$ | Wandlerverstärkung |
| $\nu = n\_t/n\_mot$ | Drehzahlverhältnis Turbinendrehzahl zu Motordrehzahl |

Mit diesen Kennlinien kann für jeden Betriebszustand das Pumpenmoment $M\_P$ und das Turbinenmoment $M\_T$ des Drehmomentwandlers berechnet werden zu

$$M\_p = M\_p2000\ (\nu)\ *\ n\_mot**2\ /\ (2000\ 1/min)**2\ \text{und}$$

$$M\_t = \mu\_WV\ (\nu)\ *\ M\_p.$$

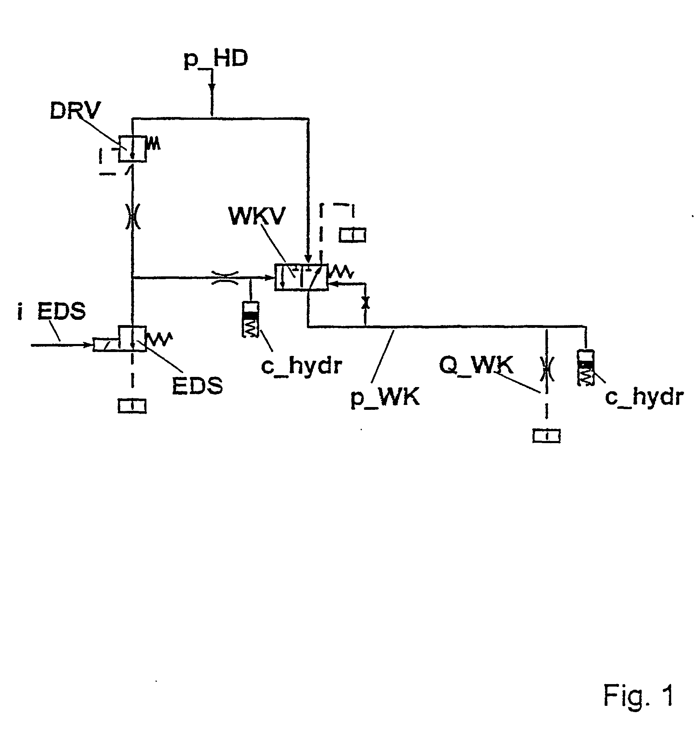

Fig. 1 zeigt nun eine schematische Darstellung einer stark vereinfachten hydraulischen Ansteuerung einer Wandlerüberbrückungskupplung. Mit WKV ist ein Wandlerkupplungsventil bezeichnet, über das der Kolben der Wandlerüberbrükkungskupplung WK zur Drehmomentenübertragung mit Druck p_WK beaufschlagt wird. Üblicherweise weist die WK einen gewissen Öldurchfluß Q_WK auf, beispielsweise zur Belagkühlung im Dauerschlupfzustand. In Fig. 1 ist diese WK-Durchströmung vereinfacht durch eine Blende dargestellt. Ein Systemdruck p_HD wird zunächst über ein Konstantdruckregelventil DRV auf ein auf den Typ des elektrischen Druckstellers EDS, beispielsweise ein elektrohydraulischer Druckregler oder ein elektrohydraulisches Taktventil, abgestimmtes Druckniveau reduziert. Der EDS wird mit von der elektronischen Getriebesteuerung mit einem Steuerstrom i_EDS beaufschlagt, wodurch das Wandlerkupplungsventil WKV, das beispielsweise als Analogventil ausgeführt ist, mit einem Steuerdruck beaufschlagt wird und die Druckleitung vom Systemdruck p_HD zum Kolben der Wandlerüberbrückungskupplung freigibt. Hierbei stellt das Wandlerkupplungssventil WKV einen auf den Wandlertyp und auf das zu übertragende Drehmoment abgestimmten Druck p_WK ein. Zur weiteren Verdeutlichung der auf das Ansteuerungs-System wirkenden Einflüsse sind die hydraulischen Elastizitäten c_hydr eingezeichnet.

Das nichtlineare stationäre Übertragungsverhalten des Wandlerkupplungsdruckes p_WK = f (i_EDS), verursacht durch den Drucksteller EDS, wird im regelungstechnischen Modell als Kennlinie dargestellt. Die dynamische Simulation des Systems ergibt ein nichtlineares Verhalten 2. Ordnung, das sich entsprehend der Analyse der Frequenzgänge mit folgender Modell-Gleichung beschreiben läßt:

$$T(\theta, p\_WK)**2 * \ddot{p}\_WK + 2 * D(\theta, p\_WK) * T(\theta, p\_WK) * \dot{p}\_WK + p\_WK = p\_soll$$

mit

T ($\theta$, p_WK)  Zeitkonstante als Kennfeld in Abhängigkeit von Getriebetemperatur $\theta$ und Druck p_WK,

D ($\theta$, p$_{WK}$)  Dämpfung als Kennfeld in Abhängigkeit von Getriebetemperatur $\theta$ und Druck p_WK.

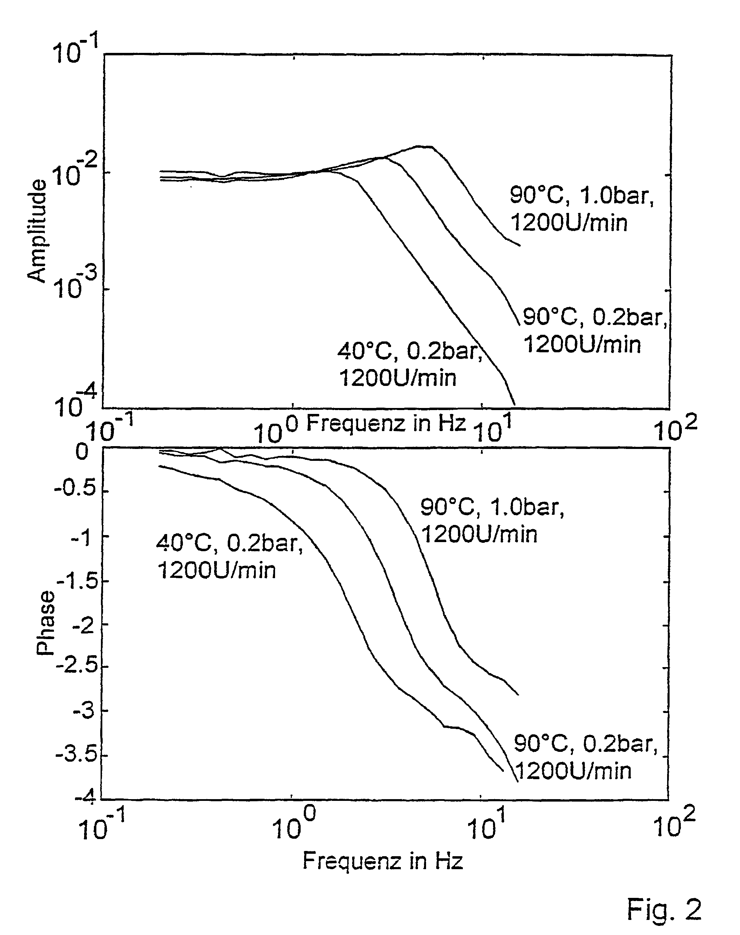

Fig. 2 zeigt eine beispielhafte meßtechnische Identifikation der Modell-Gleichung für das Übertragungsverhalten p_WK = f(i_EDS). Dargestellt ist eine Variation der Zeitkonstanten und Dämpfungen in Abhängigkeit der Temperatur und des Drucks anhand der Frequenzgänge und Phasengänge.

Selbstverständlich kann die mathematische Beschreibung des nichtlinearen Übertragungsverhaltens des Wandlerkupplungsdruckes durch detailliertere physikalisch-mathematische Modelle verfeinert werden, was die versuchstechnische Identifikation der einzelnen Gleichungsparameter vereinfachen kann.

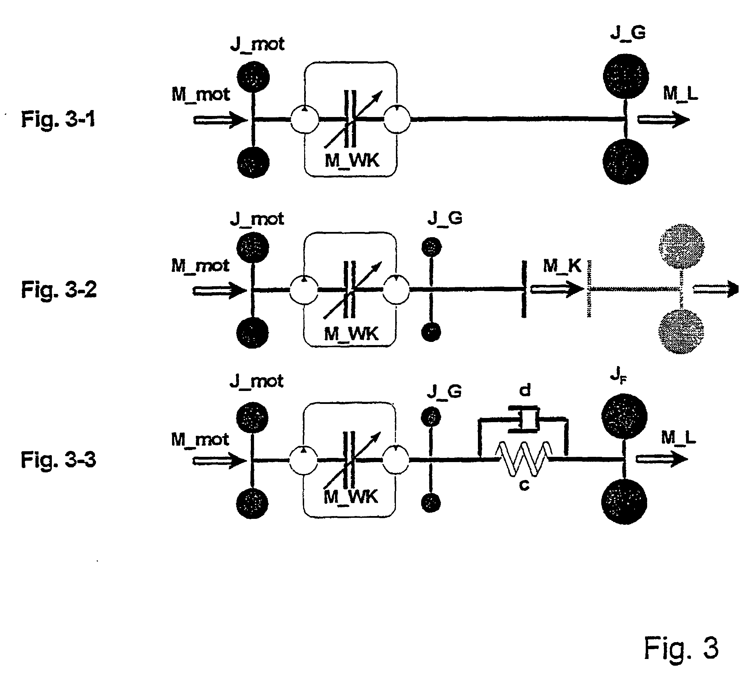

In Fig. 3 sind beispielhaft drei vereinfachte Moment-Massen-Modelle des Fahrzeug-Antriebsstrangs abgebildet. Die Modelle sind wegen der wechselnden Trägheitsmomente im Getriebe gang- und schaltungsabhängig beschrieben. Fig. 3-1 zeigt ein einfaches Modell für eine feste Gangstufe, das mit zwei Differentialgleichungen beschrieben werden kann:

$$J\_mots * \dot{\omega}\_mot = M\_mot - M\_p - M\_WK$$

$$J\_G * \dot{\omega}\_t = M\_t + M\_WK - M\_L$$

mit

M_mot  vom Motor erzeugtes Moment, reduziert um alle Verluste (Reibung, angehängte Hilfsaggregate inkl. Getriebepumpe),

M_p, M_t  Pumpen- und Turbinenmoment des hydraulischen Kreislaufs des Wandlers,

M_WK  Moment an der Wandlerüberbrückungskupplung,

M_L  Lastmoment aus Fahrwiderstand am Abtrieb,

J_mot  Motor-Trägheitsmoment (inkl. Primärseite des Wandlers),

J_G      gangabhängiges Ersatz-Trägheitsmoment (beinhaltet Sekundärseite des Wandlers, alle rotierenden Teile des Getriebes, Gelenkwelle, Ausgleichsgetriebe, Achswellen, Räder und Fahrzeugmasse; jeweils reduziert auf die Turbinendrehzahl $n\_t$),

$\omega\_mot$      Winkelgeschwingigkeit des Motors,

$\omega\_t$      Winkelgeschwingigkeit der Wandlerturbine.

In Fig. 3-2 ist ein zweites Modell für einen Antriebsstrang dargestellt, das eine Gangschaltung, also das Verlassen der Synchrondrehzahl des alten Ganges bis zum Erreichen der Synchrondrehzahl des neuen Ganges, berücksichtigt. Das Modell kann durch die Gleichungen

$$J\_mot * \dot{\omega}\_mot = M\_mot - M\_p - M\_WK$$

$$J\_G * \dot{\omega}\_t = M\_t + M\_WK - M\_K + (k\_L * M\_L)$$

mit

M_mot      vom Motor erzeugtes Moment, reduziert um alle Verluste (Reibung, angehängte Hilfsaggregate inkl. Getriebepumpe),

M_p, M_t      Pumpen- und Turbinenmoment des hydraulischen Kreislaufs des Wandlers,

M_WK      Moment an der Wandlerüberbrückungskupplung,

J_mot      Motor-Trägheitsmoment (inkl. Primärseite des Wandlers),

J_G      schaltungsabhängiges Getriebe-Trägheitsmoment (beinhaltet alle rotierenden Teile zwischen WK und Schaltkupplung; reduziert auf die Turbinendrehzahl $n\_t$),

M_K      Moment an der Schaltkupplung,

(k_L*M_L)      Anteil des Lastmomentes aus kinematischer Kopplung über die Planetenradsätze,

$\omega\_mot$      Winkelgeschwingigkeit des Motors,

$\omega\_t$      Winkelgeschwingigkeit der Wandlerturbine.

beschrieben werden.

Simulation und Versuche im Fahrzeug haben gezeigt, daß das einfache Antriebsstrangmodell nach Fig. 3-1 für große Gesamtübersetzungen (d.h. für kleine Gänge) nicht mehr geeignet ist, da es die erste Schwingungseigenform des Abtriebsstrangs vernachlässigt. Bestimmend sind hier die Federsteifigkeiten der Achswellen. In Fig. 3-3 ist ein beispielhaftes Modell dargestellt, daß die Drehschwingungs-Federsteifigkeiten und die Drehschwingungs-Dämpfung des Antriebsstrangs berücksichtigt. Die Anzahl der Differentialgleichungen erhöht sich hierbei auf drei:

$$J\_mot * \dot{\omega}\_mot = M\_mot - M\_p - M\_WK$$

$$J\_G * \dot{\omega}\_t = M\_t + M\_WK - M\_Feder$$

$$J\_F * \dot{\omega}\_ab = M\_Feder - M\_L$$

mit

$$M\_Feder = c * \left( \int \omega\_t \, dt - \int \omega\_ab \, dt \right) + d * (\omega\_t - \omega\_ab)$$

und

M_mot      vom Motor erzeugtes Moment, reduziert um alle Verluste (Reibung, angehängte Hilfsaggregate inkl. Getriebepumpe),

M_p, M_t      Pumpen- und Turbinenmoment des hydraulischen Kreislaufs des Wandlers,

M_WK      Moment an der Wandlerüberbrückungskupplung,

M_Feder      Moment entsprechend der Auslenkung und Auslenkungsgeschwindigkeit der Achswellen,

| M_L | Lastmoment aus Fahrwiderstand am Abtrieb, |
| --- | --- |
| J_mot | Motor-Trägheitsmoment (inkl. Primärseite des Wandlers), |
| J_G | gangabhängiges Getriebe- und Abtriebsstrang-Trägheitsmoment (beinhaltet alle rotierenden Teile zwischen WK und Schaltkupplung Achswellen, reduziert auf die Turbinendrehzahl n_t), |
| J_F | gangabhängiges Fahrzeug-Trägheitsmoment (beinhaltet Räder und Fahrzeugmasse, reduziert auf die Turbinendrehzahl n_t), |
| ω_mot | Winkelgeschwingigkeit des Motors, |
| ω_t | Winkelgeschwingigkeit der Wandlerturbine, |
| ω_ab | Winkelgeschwindigkeit des Abtriebs. |

Selbstverständlich sind weitere komplexere mathematische Antriebsstangmodelle darstellbar, beispielsweise kann das Modell nach Fig. 3-2 um die Einflüsse der Drehelastizitäten ähnlich dem Ansatz des Modells nach Fig. 3-3 erweitert werden.

Erfindungsgemäß wird nun mit Hilfe der zuvor beispielhaft beschriebenen Systemkenntnisse eine modellbasierte Regelung entworfen, welche die gewünschte Funktionalität zur Verfügung stellt, ohne dabei in bestimmten Betriebssituationen auf Sonderfunktionen zurückgreifen zu müssen. Realisiert wird hierbei eine hohe Dynamik des geschlossenen Regelkreises, die Regelabweichungen bleiben also bei hochdynamischen Vorgängen in allen Fällen hinreichend klein. Darüber hinaus ist die Regelung dabei so robust, daß die Regelqualität trotz der technisch unvermeidbaren Bauteilstreuungen aller im Regelkreis enthaltenen Komponenten und der im Laufe der Getriebelebensdauer auftretenden Systemveränderungen immer erhalten bleibt.

Die Anforderung nach hoher Robustheit stellt in gewisser Weise einen Widerspruch zu der Anforderung nach hoher Dynamik dar, da große Kreisverstärkungen im allgemeinen zu einer Verringerung der Stabilitätsreserven führen. Erfindungsmäßig gelöst wird der Widerspruch durch eine genaue Kompensation und Vorsteuerung aller bekannten Einflüsse und somit wird der Regler weitestgehend entlastet. Die weiteren Vorteile der erfindungsgemäßen Regelung sind die leichtere Applizierbarkeit durch größtenteils physikalisch interpretierbare Parameter sowie die Reduktion der Parameter auf ca. 50 % im Vergleich zu den bekannten Funktion.

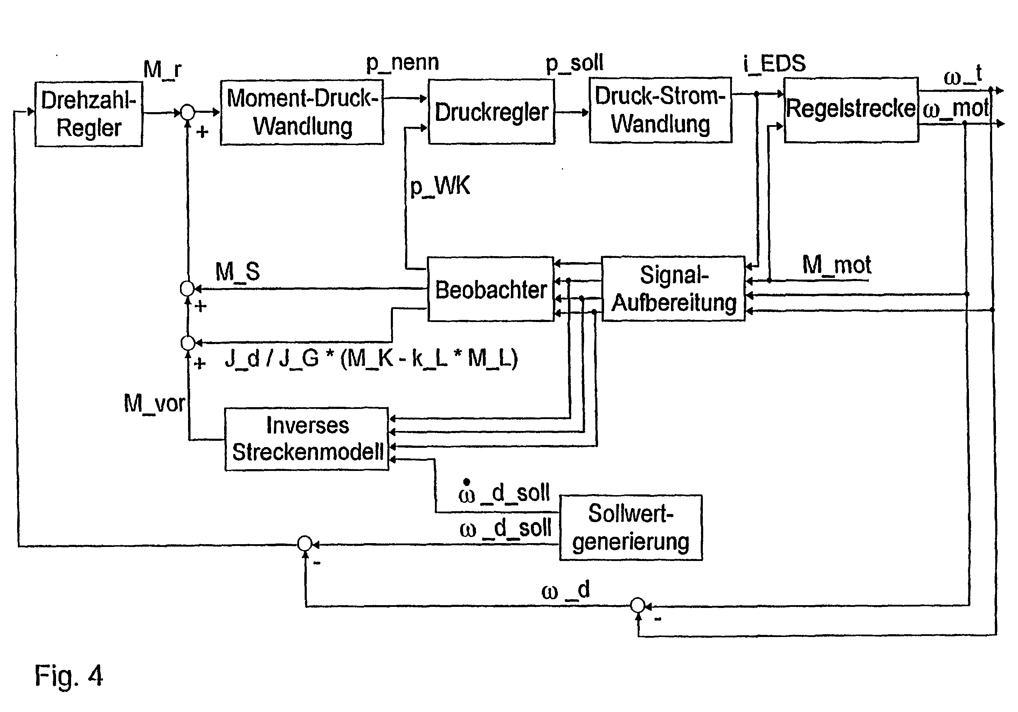

Fig. 4 stellt ein ausgeführtes Beispiel eines erfindungsgemäßen Regelsystems zur Kupplungsregelung dar mit einem modellbasierten Kompensationsdruckregelkreis unter Verwendung eines Störgrößenbeobachters, der aus dem Antriebsstrangmodell die Störgrößen der Kupplungsregelung nach einem Zustandsschätzverfahren schätzt. Das Blockdiagramm des Regelkreises besteht aus den Blöcken *"Signalaufbereitung"*, *"Sollwertgenerierung"*, *"Inverses Streckenmodell"*, *"Beobachter"*, *"Drehzahlregler"*, *"Moment-Druck-Wandlung"*, *"Druckregler"*, *"Druck-Strom-Wandlung"* und *"Regelstrecke"*. Sowohl dem *"Inversen Streckenmodell"* als auch dem *"Beobachter"* liegen dabei die zuvor beschriebenen Modellgleichungen zugrunde.

Das *"Inverse Streckenmodell"* kompensiert mit Hilfe der gemessenen Drehzahlen und des von der elektronischen Motorsteuerung des Antriebsmotors zur Verfügung gestellten oder meßtechnisch erfaßten Motormoments alle bekannten auf das System einwirkenden Drehmomente. Ein entsprechendes Vorsteuermoment Moment M_vor kann durch die Gleichung

$$M\_vor = \frac{J\_d}{J\_mot}*M\_mot - \frac{J\_d}{J\_mot}*M\_p - \frac{J\_d}{J\_G}*M\_t - J*\dot{\omega}\_d\_soll$$

beschrieben werden. In vorteilhafter Weise werden die rotatorischen Momente nunmehr auf die Differenzwinkelgeschwingigkeit der zu regelnden Wandlerüberbrückungskupplung bezogen. J_d ist dabei das Trägheitsmoment, das sich durch die Differenzwinkelgeschwindigkeit ergibt. Für eine vollständige Kompensation werden weiterhin das am Abtrieb anliegende fahrwiderstandsbedingte Lastmoment M_L sowie bei Schaltungen die Momente der zuschaltenden und abschaltenden Kupplung benötigt. Letztere können zu einem Gesamtschaltmoment M_K zusammengefaßt werden. Werden Lastmoment M_L und Gesamtschaltmoment M_K zusätzlich in geeigneter Weise aufgeschaltet, befindet sich das System unabhängig vom aktuellen Betriebspunkt in einem grenzstabilen Gleichgewichtszustand. Durch das Hydrauliksystem eingebrachte Verzögerungen trifft diese Aussage jedoch nur für stationäre Betriebszustände zu.

Da das physikalisch-mathematische Streckenmodell das Verhalten der realen komplexen Strecke nicht vollständig abbilden kann, wird in den Modellgleichungen erfindungsgemäß ein Störmoment M_S eingeführt, in dem die Unterschiede zwischen Modell und Realität zusammengefaßt werden. Wegen der verhältnismäßig großen Parameter-Unsicherheiten in der beispielhaft betrachteten Wandlerkupplung wird diese Störung im beispielhaft ausgeführten Kompensationsregelkreis als zusätzliches Kupplungsmoment berücksichtigt. Dies stellt aber keine Einschränkung für eine vollständige Kompensation dar, da sich damit in Verbindung mit den ebenfalls unbekannten Last- bzw. Schaltmomenten immer eine Momentenkombination schätzen läßt, die alle denkbaren Abweichungen abdecken kann.

Insbesondere um die Schätzfehler bei dynamischen Vorgängen klein zu halten, müssen alle auf den Kupplungskolben wirkenden Drücke, d. h. die nominellen Reibmomente an der Kupplung bekannt sein. Da diese im allgemeinen nicht bekannt sind, wird hierzu erfindungsgemäß ein kombinierter Zustands- und Störbeobachter eingesetzt, der Kupplungsdruck p_WK, Lastmoment M_L und Störmoment M_S auf Basis der gemessenen Drehzahlen rekonstruiert. Bei Schaltungen werden anstatt des Lastmoments M_L die Momente der Schaltkupplungen M_K beobachtet. Das Lastmoment M_L wird dabei in dem ausgeführten Beispiel für den Zeitraum der Schaltung als konstant angenommen, in einem anderen Ausführungsbeispiel des Kompensationsregelkreises kann auch ein variables Lastmoment regelungstechnisch verarbeitet werden.

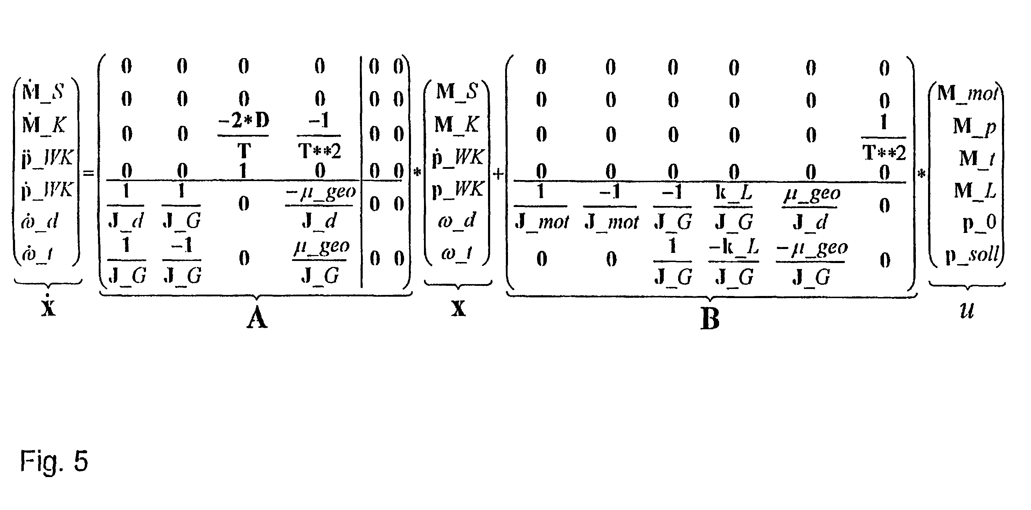

Um den Aufwand gering zu halten und gleichzeitig die Leistungsfähigkeit des Schätzverfahrens zu steigern, wird erfindungsgemäß vorgeschlagen, nur die unbekannten Größen durch den Bebobachter zu schätzen, d. h. auf den Entwurf eines reduzierten Beobachters zurückzugreifen. Das Differentialgleichungssystem für einen solchermaßen ausgebildeten Beobachter zur Schätzung der Störgrößen während einer Schaltung entsprechend dem Antriebsstrangmodell nach Fig. 3-2 ist in Fig. 5 als Matrix angegeben. Das Differentialgleichungssystem des reduzierten Beobachters läßt sich also als Vektorgleichung in der Form

$$\dot{x}=A*x+B*u$$

darstellen.

Außerhalb von Schaltungen wird im Zustandsvektor das Schaltmoment M_K durch das Lastmoment M_L ersetzt, welches dann aus dem Vektor der Stellgrößen herausfällt. Damit ergibt sich bei Aufteilung der in Fig. 5 gezeigten Systemmatrix A in vier Teile A11, A12 = 0, A21 und A22 sowie einer entsprechenden Aufteilung der in Fig. 5 gezeigten Stellmatrix B in zwei Teile B1 und B2 die mathematische Form, die für einen reduzierten Beobachterentwurf benötigt wird. Die Matrix A11 umfaßt dabei die quadratische Submatrix, durch die die zu beobachtenden Größen auf sich selbst zurückwirken. Für stationäre Betriebszustände gelten die Annahmen M_S = konst und M_K = konst zumindest für die unbekannten Momente im Dynamikmodell. Das Differentialgleichungssystem des reduzierten Beobachters hat somit die vereinfachte mathematische Form

$$\dot{\rho}=(A11\text{-}L^*A21)^*\rho+(B1\text{-}L^*B2)^*u+[(A11\text{-}L^*A21)+A12\text{-}L^*A22]^*y$$

Darin beschreibt y = (ω_d ω_t)**T den Vektor der gemessenen Größen, während aus dem Vektor der gemessenen Größen und aus der Gleichung
P = (M_S M_K dp_WK/dt p_WK)**T - L*y mit Hilfe der Meßgrößen die zu beobachtenden Größen rekonstruiert werden können. Die Beobachtermatrix L bestimmt die Eigenwerte des Beobachters. Beispielsweise mit nur zwei freien Entwurfsparametern 11 und 12 kann eine Beobachtermatrix

$$\mathbf{L}=\begin{pmatrix} \dfrac{J\_G*J\_d}{J\_G+J\_d}*l1 & \dfrac{J\_G*J\_d}{J\_G+J\_d}*l1 \\ -J\_mot*l2 & -(J\_mot+J\_G)*l2 \\ 0 & 0 \\ 0 & 0 \end{pmatrix}$$

für die Zustandsschätzung gewählt werden. In vorteilhafter Weise führt diese Form dazu, daß der geschätzte Kupplungsdruck p_WK unabhängig von Messungen ist und nur von der Stellgröße p_soll abhängt. Es konnte nachgewiesen werden, daß dieses Teilsystem des Kompensationsdruckregelkreises selbst regelungstechnisch stabil ist und daher Schätzfehler mit der der Hydraulik eigenen Dynamik abklingen.

Die Vorteile dieser erfindungsgemäßen Generierung des Störgrößenbeobachters sind eine deutliche Verringerung des Rechenaufwandes und eine bessere Interpretierbarkeit des gesamtem Systemverhaltens der betrachteten Kupplung.

Ein wesentlicher weiterer Vorteil ergibt sich aus der Separierung des nichtlinearen Anteils des Beobachters, nämlich die von der Getriebeöltemperatur θ und vom Kupplungsdruck p_WK abhängige Zeitkonstante T = f(θ, p_WK) und die ebenfalls von der Getriebeöltemperatur θ und vom Kupplungsdruck p_WK abhängige Dämpfung D = f(θ, p_WK). Der regelungstechnische Entwurf des Restsystems kann somit nach der linearen Theorie erfolgen.

Die Beschränkung auf nur zwei Entwurfsparameter 11 und 12 in der Beobachtermatrix führt zu einer leichteren Handhabbarkeit bei der Applikation im Fahrzeug. In der zuvor angegebenen Form entsprechen diese beiden Parameter direkt den Kehrwerten der Zeitkonstanten des linearen Restsystems. Weiterhin ist das System im geschlossenen Regelkreis robust gegenüber Fehler im Hydraulikmodell, wenn der geschätzte Druck nicht direkt auf das Schaltmoment einwirkt, welches physikalisch bedingt eine hohe Dynamik besitzt und deshalb schneller bestimmt werden muß als die übrigen unbekannten Größen.

In einer Ausgestaltung der Erfindung wird vorgeschlagen, den Störgrößenbeobachter derart auszubilden, daß alle Systemgrößen geschätzt werden. In vorteilhafter Weise kann hierdurch insbesondere die Vorsteuerqualität für den Regler und damit letztlich die Regelqualität weiter verbessert werden.

In einer anderen Ausgestaltung der Erfindung wird vorgeschlagen, den Störgrößenbeobachter als Kalman-Filter auszubilden, dessen Vorteile bereits vorne genannt sind.

Durch die bisher beschriebenen Reglerteile *"Inverses Streckenmodell"* und *"Beobachter"* des erfindungsgemäß ausgeführten Kompensationsdruckregelkreises nach Fig. 4 wird das System in eine Form überführt, bei der jeder Betriebspunkt als regelungstechnisch stationärer Gleichgewichtspunkt verwendet werden kann. Dies gilt damit natürlich auch für den Sollwert. Die Aufgabe des in Fig. 4 gezeigten Blocks *"Drehzahlregler"* besteht nun darin, bei Abweichungen vom Sollwert die Differenzdrehzahl diesem wieder anzunähern. Durch die zuvor beschriebenen erfindungsgemäßen Maßnahmen muß dieser Drehzahlregler jedoch keine speziellen Komponenten zur Gewährleistung einer stationären Genauigkeit enthalten. Im einfachsten Fall kann der Drehzahlregler also als P-Regler ausgebildet sein. Zur Erhöhung der Dynamik ist ein etwas komplexerer PD-Regler mit einem zusätzlichen nichtlinearen Term vorteilhaft, der bei größeren Abweichungen eine schnellere Annäherung an den Sollwert ermöglicht und dabei das Verhalten in der Nähe des Sollwertes selbst nur wenig beeinflußt. In einem solchermaßen ausgebildeten PD-Drehzahlregler findet das nichtlineare Reglermodell seine Abbildung in dem Regelgesetz für das Reglermoment M_r der zu regelnden Kupplung

$$M\_r=k\_P*(\Delta\omega\_d + k\_NL*|\Delta\omega_d|*\Delta\omega\_d)+k\_D*\Delta\dot{\omega}\_d$$

mit

$$\Delta\omega\_d=\omega\_d\_soll-\omega\_d,$$

dem proportionalen Reglerparameter k_P, dem nicht linearen Reglerparameter k_NL und dem differentiellen Reglerparameter k_D.

Die einzelnen Parameter des Drehzahlreglers lassen sich beispielsweise mit dem bekannten Verfahren des Gain-Scheduling berechnen. Hierzu wird das System unter Berücksichtigung der anderen Reglerteile in Abhängigkeit der Systemparameter und Zustandsgrößen um den Sollwert linearisiert und für jeden Betriebspunkt ein Satz Reglerparameter bestimmt, so daß die Eigenwerte des geschlossenen Regelkreises näherungsweise unabhängig vom aktuellen Zustand des Systems sind. Um dabei die Abhängigkeiten der Reglerkoeffizienten von anderen Größen zu reduzieren, wird in dem in Fig. 4 dargestellten erfindungsgemäßen Ausführungsbeispiel vorgeschlagen, die Blöcke *"Moment-Druck-Wandlung"* , *"Druckregler"* und *"Druck-Strom-wandlung"* in den Regelkreis einzuführen.

Der Block *"Moment-Druck-Wandlung"* berechnet aus dem von der Regelung kommenden Sollmoment ( M_r + M_S + J_d /J_G * (M_K - k_L*M_L) ) einen Solldruck p_nenn für die Wandlerkupplung. In dieser Umrechnung gehen in erster Linie der Reibwert des Kupplungsbelags und ein Druckoffset ein, welche beide hauptsächlich von der Getriebeöltemperatur und der Motordrehzahl abhängen. Hierdurch wird eine betriebspunktunabhängige Umrechnung der Stellgröße gewährleistet.

Das im Blockdiagramm folgende Teilsystem ist der *"Druckregler"*. Diesem kommt eine wesentliche Bedeutung zu, weil das Systemverhalten maßgeblich von der Dynamik des hydraulischen Stellsystems beeinflußt wird. Wie zuvor beschrieben, hängt die Dynamik des Stellglieds im wesentlichen vom Druckniveau selbst und von der Getriebeöltemperatur ab. Die im angestrebten Betriebsbereich real vorhandenen Schwankungen üblicher Stellglieder sind betragsmäßig so groß, daß sie nicht vernachlässigt werden können (übliche Eckfrequenzen variieren von weit über 0.1 s bis zu 0.02 s). Insbesondere in kalten Betriebszuständen ist die Dynamik des Stellsystems selbst zu langsam, um die an die Regelung gestellten Anforderungen hinsichtich Geschwindigkeit zu erfüllen. Die Aufgabe des Blocks Druckregler ist es also, die Toleranzen des hydraulischen Stellsystems mit Hilfe des vom Beobachter geschätzen Kupplungsdrucks auszugleichen. Erfindungsgemäß wird hierzu ein Regler mit PT2-Charakeristik vorgeschlagen, der nach dem Prinzip der exakten Linearisierung entworfen wird, mit einem Regelgesetz:

$$p\_soll=\left(\frac{T}{T\_dr}\right)^2 (p\_nenn-p\_WK)+p\_WK+2*\frac{T}{T\_dr}(D*T\_dr-D\_dr*T)*\dot{p}\_WK$$

Die Reglerparameter T_dr und D_dr sind darin die Zeitkonstante und die Dämpfung des linearen PT2-Verhaltens, das als Solldynamik im Prinzip beliebig vorgegeben werden kann. In der praktischen Ausführung ist einer hohen Solldynamik Grenzen gesetzt durch einen zu stark differenzierenden Reglercharakter. Dies wird vor allem bei der zuvor beschriebenen Struktur der Beobachtermatrix L deutlich. In dieser Form arbeitet der entworfene Druckregler als modellgestützte feed-foreward Kompensation der nichtlinearen Druckdynamik, welche diese durch das gewünschte Verhalten ersetzt. Es ist offensichtlich, daß die Wirksamkeit dieser Maßnahme entscheidend von der Genauigkeit des zugrundeliegenden Modells abhängt. In der Praxis hat sich gezeigt, daß bereits eine betriebspunktabhängige Modellierung des Zeitverhaltens ausreicht, um gegenüber dem nichtkompensierten System erhebliche Perfomance-Gewinne erzielen zu können.

Im Anschluß an den Block Druckregler erfolgt ein Block *"Druck-Strom-Wandlung"*, welcher im wesentlichen aus einer Invertierung der stationären Druckreglerkennlinie mit anschließender Stromregelung besteht. Die Stromregelung ist hierbei eine Standardregelung, wie sie für übliche Druckregler verwendet wird. Eine Modifikation ist nicht notwendig, da die Grenzfrequenz der üblichen Stromregelung deutlich über der des Druckreglers liegt.

Die beiden letzten im Blockdiagramm des in Fig. 4 dargestellten erfindungsgemäßen Kompensationsdruckregelkreises enthaltenen Blöcke sind die *"Signalaufbereitung"* und die "*Sollwertgenerierung*". Beide versorgen den Regler mit den benötigten Informationen in einer geeigneten Form. Letzteres spielt vor allem bei der *"Signalaufbereitung"* eine wichtige Rolle. Neben einer eventuellen Filterung stark verrauschter Signale sorgt dieser Block dafür, daß alle Informationen zeitsynchron zur Verfügung stehen. Speziell der Beobachter kann sich sensitiv auf eine Vermischung von zueinander asynchron aufgenommenen Signalen verhalten. Dies resultiert beispielsweise aus den unterschiedlichen CAN-Bus-Laufzeiten einzelner Signale und deren Ausbereitung. Auch können einzelne Signale (wie z.B. die Motordrehzahl) nicht in allen Betriebszuständen für jeden Regeltakt aktuell zur Verfügung gestellt werden können, da sie von einem externen Steuergerät der elektronischen Getriebesteuerung zugeführt werden. Erfindungsgemäß wird vorgeschlagen, die Synchronisation durch Verzögerung schneller und Extrapolation langsamer Signale auszuführen. Die *"Sollwertgenerierung"* stellt neben dem Sollwert ω_d_soll für die Drehzahlregelung der Kupplung auch dessen zeitliche Ableitung zur Verfügung, die für eine korrekte Vorsteuerung des Systems vorteilhaft ist. Die Bestimmung dieser Größen erfolgt beispielsweise durch die Verwendung von Filtern zweiter Ordnung, die die in Kennfeldern abgelegten nominellen Werte stetig differenzierbar glätten. Ein weiterer Vorteil dieser Vorgehensweise ist die Möglichkeit, bei Einregelvorgängen oder Lastwechseln durch eine entsprechende Filterinitialisierung stetig differenzierbar auf den Istgrößen aufsetzen zu können.

Der erfindungsgemäße modellbasierte Kompensationsdruckregelkreis mit einem Störgrößenbeobachter, der aus dem Antriebsstrangmodell die Störgrößen der Kupplungsregelung nach einem Zustandsschätzverfahren schätzt, ist universell für jede elektrohydraulisch angesteuerte Kupplung einsetzbar. Weitere Anwendungsfälle neben der im Detail beschriebene Regelung einer Wandlerüberbrückungskupplung sind beispielsweise eine nasse Anfahrkupplung in einem Automatgetriebe oder einen automatisierten Handschaltgetriebe ohne oder mit Standabkoppelung (stand by control, SBC), eine Schaltkupplung oder Schaltbremse in einem Automatgetriebe. Gegenüber den nach dem Stand der Technik bekannten Ansteuerungskonzepten werden insbesondere durch ein betriebspunktunabhängiges, gleichbleibendes Regelverhalten des geschlossenen Regelkreises wesentliche Vorteile bezüglich Folge- und Störverhalten und Dynamik erzielt. Erreicht wurde diese durch:

- Kompensationsdruckregler zur Beschleunigung des Stellgliedes,
- Ersatz des üblichen I-Reglers durch einen Störbeobachter,
- verbesserte Vorsteuerung (genaueres Modell).

Der Gewinn an Leistungsfähigkeit ermöglicht weitgehend den Verzicht auf Sonderfunktionen, was sowohl die Handhabung als auch die Strukturierung der Software erleichtert. Der modellbasierte Reglerentwurf ermöglicht die Verwendung physikalisch interpretierbarer Parameter. Dies vereinfacht die Portierbarkeit und Applikation erheblich.

Bezugszeichen

| | |
|---|---|
| WK | Wandlerüberbrückungskupplung |
| WKV | Wandlerkupplungsventil |
| p_WK | Wandlerkupplungsdruck |

| p_HD | Systemdruck |
|---|---|
| DRV | Konstantdruckregelventil |
| EDS | elektrohydraulischer Druckregler |
| i_EDS | Strom |
| Q_WK | WK-Durchfluß |
| c_hydr | hydraulische Elastizität |
| M_mot | Motormoment |
| J_mot | Trägheitsmoment von Motor und Wandler-Primärseite |
| M_WK | Moment an der Wandlerüberbrückungkupplung |
| J_G | gangabhängiges Ersatz-Trägheitsmoment von Getriebe und Antriebsstrang |
| M_L | Lastmoment aus Fahrwiderstand |
| M_K | Moment an einer Schaltkupplung |
| d | Drehschwingungs-Dämpfungskonstante des Antriebsstrangs |
| c | Drehschwingungs-Federsteifigkeit des Antriebsstrangs |
| J_F | gangabhängiges Trägheitsmoment des Fahrzeugs |
| M_r | Momenten-Ausgabewert der Drehzahlreglers |
| M_vor | Vorsteuermoment des inversen Streckenmodells |
| M_K | geschätztes Kupplungsmoment |
| k_L * M_L | Anteil des Lastmomentes aus kinematischer Kopplung über die Getrieberadsätze |
| J_d | aus der Differenzwinkelgeschwindigkeit der zu regelnden Kupplung entstehendes Trägheitsmoment |
| ω_mot | Winkelgeschwingigkeit des Motors |
| ω_t | Winkelgeschwingigkeit der Wandlerturbine |
| ω_d | Differenz-Winkelgeschwingigkeit an der zu regelnden Kupplung |
| ω_d_soll | Sollwert der Differenz-Winkelgeschwingigkeit an der zu regelnden Kupplung |
| p_nenn | Druck-Ausgabewert der Moment-Druck-Wandlung |
| p_soll | Druck-Ausgabewert der Druckreglers |

| A | System-Matrix der Differentialgleichung eines reduzierten Beobachters |
|---|---|
| B | Stell-Matrix der Differentialgleichung eines reduzierten Beobachters |
| T | Zeitkonstante |
| D | Dämpfungskonstante |

**Patentansprüche**

1. Verfahren zur Regelung einer elektro-hydraulisch gesteuerten Kupplung oder Bremse eines Getriebes, wobei die Kupplung oder Bremse mit einem modellbasierten Kompensationsdruckregler geregelt wird unter Verwendung eines Beobachters, und wobei der Kompensationsdruckregelkreis ein nichtlineares Kompensationsglied enthält, das dem inversen Modell der Regelstrecke von Kupplung oder Bremse entspricht, **dadurch gekennzeichnet, daß** der Beobachter Störgrößen der Kupplungsregelung auf Basis eines Antriebsstrangmodells nach einem Zustandsschätzverfahren schätzt.

2. Verfahren nach Anspruch 1, **dadurch gekennzeichnet, daß** der Beobachter nur die für die Kupplungsregelung relevanten unbekannten Systemgrößen schätzt.

3. Verfahren nach Anspruch 1, **dadurch gekennzeichnet, daß** der Beobachter alle für die Kupplungsregelung relevanten Systemgrößen schätzt.

4. Verfahren nach Anspruch 1, **dadurch gekennzeichnet, daß** der Beobachter als Kalman-Filter ausgebildet ist.

5. Verfahren nach einem der Ansprüche 1 bis 4, **dadurch gekennzeichnet, daß** der Kompensationsdruckregelkreis einen Regler enthält, der aus gemessenen Signalen, Sollvorgaben der gemessenen Signale, berechneten Werten des inversen Streckenmodells der Kupplung oder Bremse und aus mindestens einem geschätzten Wert des Beobachters eine betriebspunkt-unabhängige Stellgröße bildet.

6. Verfahren nach einem der Ansprüche 1 bis 5, **dadurch gekennzeichnet, daß** der Kompensationsdruckregelkreis einen Regler enthält, der aus gemessenen Signalen, Sollvorgaben der gemessenen Signale und aus mindestens einem geschätzten Wert des Beobachters eine von der Toleranz eines elekro-hydraulisches Stellglieds, über das die Kupplung oder Bremse hydraulisch ansteuert wird, unabhängige Stellgröße bildet.

**7.** Verfahren nach einem der Ansprüche 1 bis 5, **dadurch gekennzeichnet, daß** der Kompensationsdruckregelkreis einen Regler enthält, der aus einer berechneten Druckvorgabe für ein elekro-hydraulisches Stellglied, über das die Kupplung oder Bremse hydraulisch angesteuert wird, und aus mindestens einem geschätzten Wert des Beobachters eine von der Toleranz des elekro-hydraulisches Stellglieds unabhängige Stellgröße bildet.

**8.** Verfahren nach einem der Ansprüche 1 bis 5, **dadurch gekennzeichnet, daß** der Kompensationsdruckregelkreis mehrere verknüpfte Reglerblöcke enthält, wobei ein erster Reglerblock (Drehzahlregler) gemessene Drehzahlen und Drehzahlsollwerte oder deren äquivalente Signale ($\omega$_t, $\omega$_mot, $\omega$_d, $\omega$_d_soll) verarbeitet, und wobei ein zweiter nachfolgender Reglerblock (Moment-Druck-Wandlung) aus der Sollvorgabe (M_r) des ersten Reglerblocks, aus Vorsteuerwerten (M_vor) des inversen Streckenmodells der Kupplung oder Bremse und aus geschätzten Werten (M_S, J_d / J_G * (M_K - k_L * M_L)) des Beobachters eine betriebspunkt-unabhängige Stellgröße (p_nenn) bildet, und wobei ein dritter nachfolgender Reglerblock (Druckregler) aus der Sollvorgabe (p_nenn) des zweiten Reglerblocks und aus geschätzten Störgrößen (p_WK) des Beobachters eine von der Toleranz des elektro-hydraulischen Druckstellers unabhängige Stellgröße (p_soll) bildet, und wobei ein vierter nachfolgender Reglerblock (Druck-Strom-Wandlung) aus der Sollvorgabe (p_soll) des dritten Reglerblocks eine Stomvorgabe (i_EDS) bildet, mit der der elektro-hydraulische Drucksteller beaufschlagt wird.

**9.** Verfahren nach Anspruch 8, **dadurch gekennzeichnet, daß** der erste Reglerblock (Drehzahlregler) als P-Regler ausgebildet ist.

**10.** Verfahren nach Anspruch 8, **dadurch gekennzeichnet, daß** der erste Reglerblock (Drehzahlregler) als PD-Regler mit zusätzlichem nichtlinearen Term ausgebildet ist.

**11.** Verfahren nach Anspruch 8, **dadurch gekennzeichnet, daß** der dritte Reglerblock (Druckregler) als Regler mit PT2-Charakteristik nach dem Prinzip der exakten Linearisierung ausgebildet ist.

**12.** Verfahren nach einem der vorigen Ansprüche, **dadurch gekennzeichnet, daß** die zeitliche Ableitung der Drehzahl-Sollwerte der Kupplungsregelung oder deren äquivalente Größen im inversen Modell der Regelstrekke verarbeitet wird.

**Revendications**

**1.** Méthode de réglage d'un embrayage ou d'un frein à commande électro-hydraulique d'une boîte de vitesses, sachant que l'embrayage ou le frein sont réglés, en fonction du modèle, au moyen d'un régulateur de pression de compensation et en utilisant un observateur, et sachant que le circuit de régulation de compensation de la pression comprend un élément de compensation non-linéaire, correspondant au modèle inverse du système réglé de l'embrayage et du frein, **caractérisée en ce que** l'observateur évalue des parasites lors du réglage de l'embrayage sur la base d'un modèle de chaîne cinématique et selon une procédure d'évaluation d'états.

**2.** Méthode selon la revendication 1, **caractérisée en ce que** l'observateur n'évalue que les paramètres de système inconnus, pertinents lors de la régulation de l'embrayage.

**3.** Méthode selon la revendication 1, **caractérisée en ce que** l'observateur évalue tous les paramètres de système pertinents lors de la régulation de l'embrayage.

**4.** Méthode selon la revendication 1, **caractérisée en ce que** l'observateur est conçu comme filtre de Kalman.

**5.** Méthode selon une des revendications 1 à 4, **caractérisée en ce que** le circuit de régulation de la pression de compensation comprend un régulateur, qui forme - à partir de signaux acquis, de valeurs de consigne des signaux acquis, de valeurs calculées du modèle inverse du système réglé de l'embrayage ou du frein et à partir d'au moins une valeur évaluée de l'observateur - une grandeur réglante indépendante du point de fonctionnement.

**6.** Méthode selon une des revendications 1 à 5, **caractérisée en ce que** le circuit de régulation de la pression de compensation comprend un régulateur, qui forme - à partir de signaux acquis, de valeurs de consigne des signaux acquis et à partir d'au moins une valeur évaluée de l'observateur - une grandeur réglante indépendante de la tolérance d'un actionneur électro-hydraulique, au moyen duquel l'embrayage ou le frein sont pilotés par voie hydraulique.

**7.** Méthode selon une des revendications 1 à 5, **caractérisée en ce que** le circuit de régulation de la pression de compensation comprend un régulateur, qui forme - à partir d'une valeur de consigne de pression calculée pour un actionneur électro-hydraulique, au moyen duquel sont pilotés par voie hydraulique l'embrayage ou le frein, et à partir d'au moins une valeurs évaluée de l'observateur - une grandeur réglante indépendante de la tolérance de l'actionneur électro-hydraulique.

**8.** Méthode selon une des revendications 1 à 5, **caractérisée en ce que** le circuit de régulation de la pression de compensation comprend plusieurs blocs régulateurs enchaînés, sachant qu'un premier bloc régulateur (régulateur de régime) élabore des régimes et des valeurs de consigne de régime mesurées ou leurs signaux équivalents acquis ($\omega\_t$, $\omega\_mot$, $\omega\_d$, $\omega\_d\_soll$), et sachant qu'un deuxième bloc régulateur en aval (conversion couple/pression) forme - à partir d'une valeur de consigne ($M\_r$) du premier bloc régulateur, de valeurs de commande pilote ($M\_vor$) du modèle inverse du système réglé de l'embrayage ou du frein, et à partir de valeurs évaluées ($M\_S$, $J\_d / J\_G * (M\_K - k\_L * M\_L)$) de l'observateur - une grandeur réglante indépendante du point de fonctionnement ($p\_nenn$), et sachant qu'un troisième bloc régulateur (régulateur de pression) en aval forme - à partir de la valeur de consigne ($p\_nenn$) du deuxième bloc régulateur et de parasites évaluées ($p\_WK$) de l'observateur - une grandeur réglante indépendante de la tolérance du régulateur de pression électro-hydraulique ($p\_soll$), et sachant qu'un quatrième bloc régulateur en aval (conversion pression/courant) forme - à partir de la valeur de consigne ($p\_soll$) du troisième bloc régulateur - une valeur de consigne de courant ($i\_EDS$), alimentant l'actionneur de pression électro-hydraulique.

**9.** Méthode selon la revendication 8, **caractérisée en ce que** le premier bloc régulateur (régulateur de régime) est conçu comme régulateur proportionnel.

**10.** Méthode selon la revendication 8, **caractérisée en ce que** le premier bloc régulateur (régulateur de régime) est conçu comme régulateur proportionnel avec terme non-linéaire supplémentaire.

**11.** Méthode selon la revendication 8, **caractérisée en ce que** le troisième bloc régulateur (régulateur de pression) est conçu comme régulateur avec caractéristique PT2, selon le principe de la linéarisation exacte.

**12.** Méthode selon une des revendications précédentes, **caractérisée en ce que** la dérivation dans le temps des valeurs de consigne de régime de la régulation de l'embrayage ou de leurs grandeurs équivalentes est élaborée dans le modèle inverse du système réglé.

**Claims**

**1.** Method for the regulation of an electrohydraulically controlled clutch or brake of a transmission, with the clutch or brake being controlled by a model-based compensating pressure regulator with the help of a monitoring unit, and with the compensating pressure loop containing a nonlinear compensating element corresponding to the inverse model of the controlled system of the clutch or brake, **characterized in that** the monitoring unit employs a state estimation method to estimate disturbance variables of the clutch regulation on the basis of a drive line model.

**2.** Method according to claim 1, **characterized in that** the monitoring unit estimates only the unknown system variables relevant for clutch control.

**3.** Method according to claim 1, **characterized in that** the monitoring unit estimates all system variables relevant for clutch control.

**4.** Method according to claim 1, **characterized in that** the monitoring unit is a Kalman filter.

**5.** Method according to one of the claims 1 to 4, **characterized in that** the compensating pressure loop contains a controller that generates a working-point-independent control variable on the basis of signals measured, setpoint assignments of signals measured, calculated values of the inverse model of the controlled system of the clutch or brake, and at least one estimated value of the monitoring unit.

6. Method according to one of the claims 1 to 5, **characterized in that** the compensating pressure loop contains a controller which, based on signals measured, setpoint assignments of the signals measured, and at least one estimated value of the monitoring unit, generates a control variable, which is independent of the tolerance of the electrohydraulic actuator, through which the clutch or brake is hydraulically controlled.

7. Method according to one of the claims 1 to 5, **characterized in that** the compensating pressure loop contains a controller which, based on a calculated pressure setpoint for an electrohydraulic actuator, through which the clutch or brake is hydraulically controlled, and at least one estimated value of the monitoring unit, generates a control variable, which is independent of the tolerance of the electrohydraulic actuator.

8. Method according to one of the claims 1 to 5, **characterized in that** the compensating pressure loop contains several linked controller blocks, whereby a first controller block (speed governor) processes measured speeds and desired speeds or their equivalent signals ($w_t$, $w_{mot}$, $w_d$, $w_{d\_soll}$), and whereby a second downstream controller block (torque-pressure conversion), based on the setpoint ($M_r$) of the first controller block, on precontrol values ($M_{vor}$) of the inverse model of the controlled system of the clutch or brake, and on estimated values ($M_S$, $J_d / J_G * (M_K - k_L * M_L)$) of the monitoring unit, generates a working-point-independent control variable ($p_{nenn}$), and whereby a third downstream controller block (pressure regulator), based on the setpoint ($p_{nenn}$) of the second controller block and on the estimated disturbance variables ($p_{WK}$) of the monitoring unit, generates a control variable ($p_{soll}$), which is independent of the tolerance of the electrohydraulic pressure actuator, and whereby a fourth downstream controller block (pressure-current conversion), based on the setpoint ($p_{soll}$) of the third controller block, generates a current setpoint ($i_{EDS}$), which actuates the electrohydraulic pressure regulator.

9. Method according to claim 8, **characterized in that** the first controller block (speed governor) is a P controller.

10. Method according to claim 9, **characterized in that** the first controller block (speed governor) is a PD controller with additional nonlinear term.

11. Method according to claim 8, **characterized in that** the third controller block (pressure regulator) is designed as a regulator with PT2 characteristic according to the principle of exact linearization.

12. Method according to one of the preceding claims, **characterized in that** temporal derivation of the speed setpoints of clutch control or of their equivalent values is processed in the inverse model of the controlled system.

Fig. 1

Fig. 2

Fig. 3-1

Fig. 3-2

Fig. 3-3

Fig. 3

Fig. 4

EP 1 210 534 B1

$$
\begin{pmatrix} \dot{M}\_S \\ \dot{M}\_K \\ \ddot{p}\_{WK} \\ \dot{p}\_{WK} \\ \dot{\omega}\_d \\ \dot{\omega}\_t \end{pmatrix}
=
\underbrace{\left(\begin{array}{cccc|cc}
0 & 0 & 0 & 0 & 0 & 0 \\
0 & 0 & 0 & 0 & 0 & 0 \\
0 & 0 & \dfrac{-2*D}{T} & \dfrac{-1}{T**2} & 0 & 0 \\
0 & 0 & 1 & 0 & 0 & 0 \\
\dfrac{1}{J\_d} & \dfrac{1}{J\_G} & 0 & \dfrac{-\mu\_geo}{J\_d} & 0 & 0 \\
\dfrac{1}{J\_G} & \dfrac{-1}{J\_G} & 0 & \dfrac{\mu\_geo}{J\_G} & 0 & 0
\end{array}\right)}_{A}
*
\underbrace{\begin{pmatrix} M\_S \\ M\_K \\ \dot{p}\_{WK} \\ p\_{WK} \\ \omega\_d \\ \omega\_t \end{pmatrix}}_{x}
+
\underbrace{\left(\begin{array}{cccccc}
0 & 0 & 0 & 0 & 0 & 0 \\
0 & 0 & 0 & 0 & 0 & 0 \\
0 & 0 & 0 & 0 & 0 & \dfrac{1}{T**2} \\
0 & 0 & 0 & 0 & 0 & 0 \\
\dfrac{1}{J\_mot} & \dfrac{-1}{J\_mot} & \dfrac{-1}{J\_G} & \dfrac{k\_L}{J\_G} & \dfrac{\mu\_geo}{J\_d} & 0 \\
0 & 0 & \dfrac{1}{J\_G} & \dfrac{-k\_L}{J\_G} & \dfrac{-\mu\_geo}{J\_G} & 0
\end{array}\right)}_{B}
*
\underbrace{\begin{pmatrix} M\_{mot} \\ M\_p \\ M\_t \\ M\_L \\ p\_0 \\ p\_{soll} \end{pmatrix}}_{u}
$$

$\underbrace{\phantom{xxxx}}_{\dot{x}}$

Fig. 5